# EUROPEAN PATENT SPECIFICATION

(11) **EP 2 708 416 B1**
(45) Date of publication and mention of the grant of the patent: **13.02.2019**
(21) Application number: 12382361.9
(22) Date of filing: 18.09.2012
(51) Int. Cl.: B60P 7/13

(54) **Adjustable system to attach containers to transport vehicles**
Einstellbares System zur Befestigung von Containern an Transportfahrzeuge
Système ajustable pour fixer des contenants à des véhicules de transport

(43) Date of publication of application: 19.03.2014
(73) Proprietor: Losada Alvarez, Agueda, 50003 Zaragoza (ES)
(72) Inventor: Losada Alvarez, Agueda, 50003 Zaragoza (ES)
(74) Representative: Ungria López, Javier

(56) References cited:
- DE-A1- 19 538 915
- DE-A1- 19 755 638
- DE-A1-102004 033 886
- DE-U1- 29 622 249
- ES-U- 1 048 107

## Description

### OBJECT OF THE INVENTION

The present invention, as expressed in the statement of the present specification, relates to an adjustable system to attach containers to transport vehicles, which is of the type of systems based on a fixed support and a displaceable support holding the Twist Lock fixing element to the corresponding corner of a container and whose displaceable support can adopt at least two working positions at different heights, and whose attachment systems are assembled on container-holding chassis capable of transporting different model of containers, in such a way that the displaceable support is joined to the fixed support by means of a pair of articulated arms that are adjoined one to another in their working positions, allowing the fixing element Twist Lock to remain in the same vertical plane in the two working positions.

Therefore, the displaceable support is provided with a rotating movement in its vertical displacement from one working position to another, without producing any friction whatsoever between both supports.

### FIELD OF APPLICATION

The present specification describes an adjustable system to attach containers to transport vehicles, which is applicable to the chassis of container-holding vehicles and especially in GoosenecK Chassis, for which attachment corners of different heights are required to allow the blocking of the different container models, thus allowing the attachment of containers measuring 20, 30, 40 and 45 feet.

The system is also adaptable to any transport means, and thus it is not only adaptable to road haulage vehicles but also to other means of transport by train.

### BACKGROUND OF THE INVENTION

As is widely known, the use of containers for the transport of all types of goods, both road haulage and by train, is broadly disclosed. Because of the different measurements of the containers (20, 30, 40 and 45 feet), the positioning platforms must be adapted to allow a safely transport of all of them, and must be able to optimize its cost by not requiring specific platforms for every container size.

This way, the attachment means of the containers are adapted in order to transport containers of different sizes in the same platform, even more so when the containers are assembled at different heights and must be adapted to allow the appropriate support of the containers for its anchorage by their corners through the respective Twist Lock.

Thus, we can take into account document ES 1 048 107, which discloses an adjustable attachment for transport containers, based essentially on a fixed support and a mobile support holding the attachment element as such, of the container, Twist Lock, and whose mobile support presents a tubular body that moves vertically, guided by a pair of circular orifices of the fixed support.

Document DE 195 38 915 discloses an adjustable attachment for transport containers, which is based on a fixed support and a mobile support holding the attachment element as such, of the container, Twist Lock, and whose mobile support moves vertically in order to be positioned according to two different positions or heights.

Document DE 10 2004 033 886 discloses an adjustable attachment for transport containers, which is based on a fixed support and a mobile support holding the attachment element, a Twist Lock, and whose mobile support follows an arch-shaped path in order to be positioned according to two different heights.

Likewise, other documents such as ES 1 032 719; ES 1 039 436 and ES 2 228 215 could be taken into account, which describe different devices to attach containers onto transport platforms.

### DESCRIPTION OF THE INVENTION

The present specification describes an adjustable system to attach containers to transport vehicles of the type of systems constituted by a fixed support, fixable to the chassis of a vehicle and a displaceable support, displaceable with respect to the fixed support, that holds the fixing element named Twist Lock, being said fixing element fixable to the corresponding corner of the container, with the displaceable support adopting two working positions at different heights.

The system comprises a pair of arms rotationally joined by one of their ends to an axis crossing the fixed support, and by the other end to the displaceable support adjoined to fixed support; guiding means of the displaceable support; and blocking means of the displaceable support in the different working positions,

The fixed support and the displaceable support are adjoined by means of a vertical wall in the working positions and during the transition from a working position to another the displaceable support describes an arch the displaceable support moves away from the fixed support.

This way, when the displaceable support goes from one working position to the other by moving away from the fixed support, friction between them is avoided, and, in addition, when the fixing element Twist Lock is connected to the fixed support in both working positions, but at different heights, the corresponding corner of the container that the fixing element holds, remains in the same vertical plane, allowing the anchoring of a container in any of its two positions.

The guiding means of the displaceable support is defined by at least one vertical slot, according to its assembling position, made on the vertical adjoining wall of one of the supports, and the guiding element connected to the other support passes through said slot.

In an embodiment of the invention, the guiding means of the displaceable support is defined by means of a pair of parallel vertical slots made on the vertical wall adjoining the fixed support to the displaceable support, according to their assembly position. The respective guiding elements connected to the displaceable element pass through said slots, allowing the perfect guiding of the displaceable support when going from one working position to another working position, providing greater stability and security.

Likewise, the vertical wall of the fixed support adjoined to the displaceable support presents an orifice matching the respective orifices of the adjoining vertical wall of the displaceable support in its two working positions.

This way, in each one of the working positions of the displaceable support, one of the orifices of the vertical wall adjoined to the fixed support matches the orifice of the vertical adjoining wall of the fixed support.

The blocking means of the displaceable support is defined by an elongated lever, rotationally joined by one of its ends to a supporting platform internal to the fixed support, protruding though the lateral face opposite to the face of the rotational junction, and the lever being provided with a protrusion through one of its lateral sides in its section internal to the supporting body.

Thus, in the different working positions, the displaceable support is blocked when the protrusion of one of the lateral sides of the blocking lever passes through the orifices matching the vertical adjoining walls of both supports.

Likewise, the blocking lever is retained in its different positions by a retaining element, blocking the blocking lever with the purpose of preventing unwanted displacements.

The retaining element of the blocking lever is defined by a small positionable flange, so that in one position its manipulation is allowed and in other position the flange remains anchored, retaining the blocking lever.

The displaceable support is stressed by a pressuring element, which is affixed to the fixed support by one of its ends and to the displaceable support by its other end, so that, from the lowest position of the pressuring element, it moves the displaceable support, guided to its upper position describing a small arch.

In an embodiment of the invention, the elements associated to the fixed support can remain associated directly to the beam making up the chassis of the loading platform, being assembled during the manufacturing process of the chassis of the platform of the vehicle.

Next, in order to supplement the description and with the purpose of helping to provide a better understanding of the features of the invention, a set of drawings, wherein the most characteristic details of the invention are shown, by way of illustration and not by way of limitation, is attached to this specification.

### BRIEF DESCRIPTION OF THE DRAWINGS

Figure 1 shows a first perspective view of a fixed support and a displaceable support in a first working position, both of them being at the same height and being shown one of the arms providing the articulated junction between them, as well as a blocking lever between them.
Figure 2 shows a second perspective view of the fixed support and the displaceable support in a first working position, both of them being at the same height and being shown one of the arms providing the articulated junction between them, as well as a blocking lever between them.
Figure 3 shows a first perspective view of the fixed support and the displaceable support in a second working position, both of them being at the same height and being shown one of the arms providing the articulated junction between them, as well as a blocking lever released from the retaining element.
Figure 4 shows a second perspective view of the fixed support and the displaceable support in a second working position, both of them being at the same height and being shown one of the arms providing the articulated junction between them, as well as a blocking lever released from the retaining element.
Figure 5 shows a first sectional view of the fixed support and the displaceable support in the first working position, located at the same height, and being shown how the protrusion of a lateral side of the blocking lever is positioned in the orifices matching the adjoining walls of both supports and with the pressuring element retracted.
Figure 6 shows a second sectional perspective view of the fixed support and the displaceable support in the second working position, located at the same height, having released the displaceable support by the displacement of the blocking lever, so that, due to the action of the pressuring element, the displaceable support has been elevated to its second working position.
Figure 7 shows a sectional perspective view of the fixed support and the displaceable support in the second working position, located at different heights, being shown how the protrusion of a literal side of the blocking lever is positioned in the orifices matching the vertical adjoining walls of both supports and with the pressuring element extended.
Figure 8 shows a lateral view with the displaceable support in an intermediate position, between its first and second static working position, and slightly displaced from the fixed support and with the blocking lever released from the retaining element.
Figure 9 shows an upper plant view of the previous figure with the displaceable support in an intermediate position, between its first and second static working position, slightly displaced from the fixed support and with the blocking lever released from the retaining element.
Figures 10 and 11 show respective views of the retaining element of the blocking lever, one of the figures corresponds to the retaining position and the other figure corresponds to the manipulation and releasing position.
Figure 12 shows a perspective view of an embodiment in which the beam of the chassis of the loading platform acts as a fixed support, for which beam of the chassis of the loading platform incorporates the axis of the hinged junction of the pair of arms connected to the displaceable support, the internal supporting platform of the blocking lever and the retaining element of the same.
Figure 13 shows an upper plant view of the previous figure, being shown how a rotation axis of an extremity of the pair of arms, the blocking lever of the displaceable support and the retaining element of said blocking lever have been assembled in the beam of the chassis.

### DESCRIPTION OF A PREFERRED EMBODIMENT

Based on the aforementioned figures and according to the numerals adopted, we can observe how the adjustable system to attach containers to transport vehicles is from the type of attachment systems based on a fixed support 1 and a displaceable support 2 holding the fixing element Twist Lock 3, to the corresponding corner of a container. The displaceable support 2 adopts at least two working positions at different heights, and whose attachment systems are assembled in container-holding chassis, capable of transporting different container models.

Thus, the adjustable attachment system object of the invention is from the type of systems being constituted by a fixed support 1 and a displaceable support 2, so that the fixed support 1 is connected to the beam of the chassis of the loading platform and at the same time is rotationally joined, through a pair of arms 4, to the displaceable support 2 that holds the fixing element Twist Lock 3 to the corresponding corner of the container and whose displaceable support 2 adopts at least two working positions at different heights.

The fixing element Twist Lock 3 remains in the same vertical plane in the two working positions to allow the anchoring of the corresponding container in both positions.

The fixed support 1 is made up by a housing opened by its bottom, which connects by one of its faces to the beam of the chassis of the transport vehicle and presents the adjoining face of the displaceable support in a position parallel to the first face.

On the other hand, the pair of arms 4 is rotationally joined by one end to an axis 5 crossing the fixed support 1, and by the other end to the displaceable support 2, in such a way that in both working positions, the fixed and displaceable supports are adjoined by a vertical wall, and during the transition from a working position to another, the displaceable support 2 describes an arch and moves slightly away from the fixed support, avoiding any type of friction between them during said operation.

In addition, the adjustable attachment system incorporates a guiding means of the displaceable support 2 so that, during the transition from a working position to another, the displaceable support 2 is perfectly guided, facilitating its appropriate course in the vertical direction, so that said guiding means is defined by a pair of vertical slots 6, made on a first vertical wall 7 of the fixed support 1, which is adjoined to a second vertical wall 8 of the displaceable support 2 in both working positions, and whose second vertical wall 8 incorporates respective elements 9, fitted and sliding in the aforementioned pair of slots 6.

Likewise, the first vertical wall 7 of the fixed support 1 adjoined to the second wall 8 of the displaceable support 2 presents an orifice 13 matching a pair of respective orifices 14-14' of the second vertical wall 8 of the displaceable support in its two working positions.

Thus, in each one of the working positions of the displaceable support 2, one of the orifices of the pair of orifices 14-14' of the second vertical wall 8 matches the orifice 13 of the first vertical wall 7 of the fixed support 1.

The adjustable attachment system incorporates a blocking means of the displaceable support 2, in the different working positions. Said blocking means is defined by an elongated lever 10, rotationally joined by one end to a supporting platform 11 internal to the fixed support 1, arranged in a horizontal position. The elongated lever 10 protrudes through a lateral face opposite to the rotational junction of the elongated lever 10, and is provided with a protrusion 12 through one of its lateral sides in its section internal to the fixed support 1.

Taking this structure into account, the displaceable support 2 is blocked in the different working positions when the protrusion 12 of one of the lateral sides of the elongated blocking lever 10 goes through the matching orifices of the vertical walls 7 and 8, adjoined to both supports, and being the elongated blocking lever 10 retained by a retaining element 15.

This retaining element 15 is constituted by a small flange provided with an orifice with a first quadrangular section part 17 and a second circular section part 18, and is associated to a projection 19 of the corresponding lateral wall of the fixed support 1. Said projection 19 presents a quadrangular section and is topped with a top head, preventing its release.

Thus, when fitting the first quadrangular section part 17 of the small flange in the projection 19 with quadrangular section, the small flange 17 is blocked and with said blocking, the elongated blocking lever 10. When the second circular section part 18 remains in correspondence with the projection 19 wiht quadrangular section the free rotation of the small flange 17 and the release of the elongated blocking lever are permitted.

The displaceable support 2 is stressed by a pressuring element 16, which is affixed to the fixed support 1 by one end and is affixed by the other end to the displaceable support 2. For this purpose, the first vertical adjoining wall 7 of the fixed support 1 presents a first body 20, which is affixed to the pressuring element 16 by the free extremity of its sleeve and the second vertical adjoining wall 8 of the displaceable element 2 presents a second body 20 which is affixed to the free extremity of the piston of the pressuring element 16. Said pressuring element 16 can be replaced by any other equivalent element.

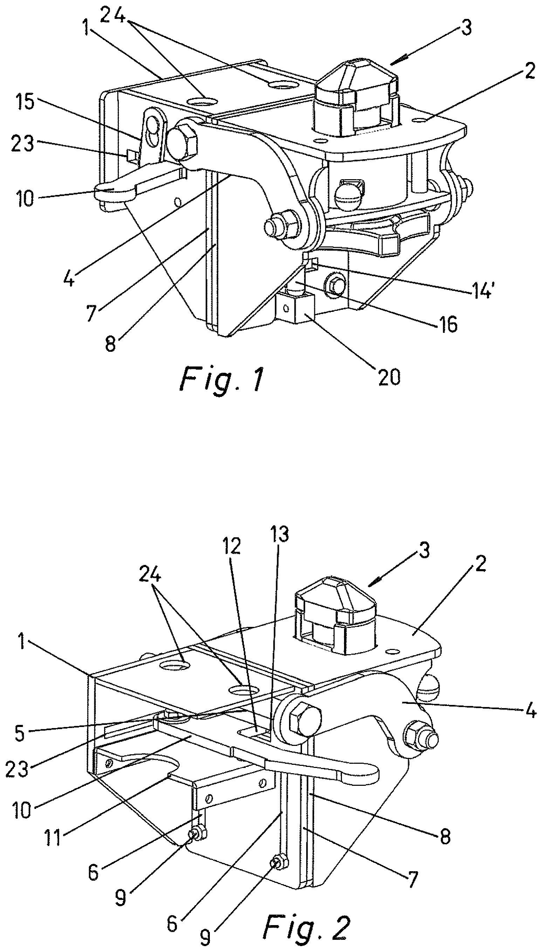

From the structure described of the adjustable system to attach containers to transport vehicles, in a first working position the displaceable support 2 is arranged at the same height as the fixed support 1, as observed in figures 1, 2 and 5, and the displaceable support 2 is blocked when fitting the protrusion 12 of one of the lateral sides of the elongated blocking lever 10 in the matching orifices 13-14 of the first and second vertical adjoining walls 7 and 8, of the fixed support 1 and of the displaceable support 2 respectively.

In this described position, the elongated blocking lever 10 is retained by means of the retaining element 15 by being the first quadrangular section 17 fitted in the projection 19 of similar quadrangular section (Figure 1).

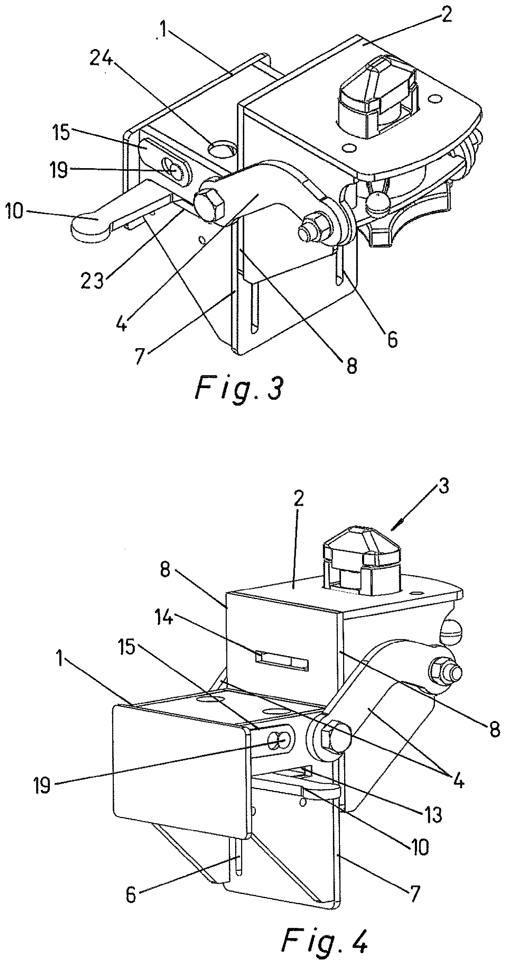

Based on the position described, in order to go to the second working position of the adjustable attachment system, first of all, the elongated blocking lever 10 must be released, for which the retaining element 15 must be displaced so that its second circular section 18 matches the projection 19 with quadrangular section, then the retaining element 15 can be rotated so that the elongated blocking lever (10) is released (Figure 3).

Once the elongated blocking lever 10 is released, it will be rotated, removing the lateral protrusion 12 from its position and consequently releasing the displaceable support 2, so that, due to the action of the pressuring element 16, the displaceable support 2 is elevated to its second working position, as shown in figures 3, 4, 6 and 7.

In said position, the displaceable support 2 will be blocked when the elongated blocking lever 10 rotates once more, making the lateral protrusion 12 of one of its lateral sides to fit in the matching orifices 13-14' of the vertical adjoining walls 7 and 8 of both supports.

Finally, the elongated blocking lever 10 will be blocked, acting with the retaining element 15 in the opposite way than the one described, that is to say, beginning from the position of the Figure 3, the second circular section part 18 will be placed in relation with the projection 19 with quadrangular section, the the retaining element is rotated and is arranged according to figure 1, with the first section part 17 fitted in the quadrangular projection.

Referring to the figures annexed, we can observe how in figures 1 and 2, the displaceable support 2 in a first working position, is at the same height as the fixed support 2, being the displaceable support 2 connected to a beam (not represented) of the chassis of the transport vehicle, in such a way that said displaceable support 2 is blocked by the elongated blocking lever 10. The elongated blocking lever 10 is joined by one end to a supporting platform 11 internal to the fixed support 1, through the rotation axis 22, and the elongated blocking lever 10 protrudes through a lateral face for its activation through the opposite end to the end of the rotational junction.

With the purpose of allowing the affixing of the fixed support 1 in a direction or another, the elongated blocking lever 10 is reversible, for which one of the lateral faces of the fixed support 1 has the corresponding window 23, and the free end opposite to the end of the rotational junction protrudes through said window 23.

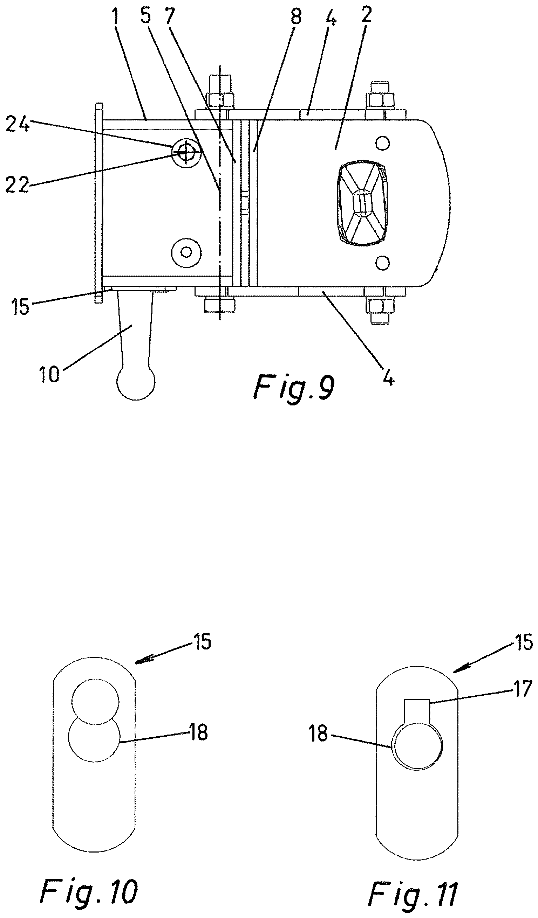

In addition, the upper face of the fixed support 1 presents a pair of orifices 24 granting access to the rotation axis 22 of the elongated blocking lever 10, allowing the elongated blocking lever 10 to be arranged in one position or the other. Figure 9 of the drawings shows the pair of orifices 24 and the axis 22 of the rotational junction of the elongated blocking lever 10.

Likewise, figure 2 shows the pair of slots 6 and the elements 9 fitted and displaceable by said slots 6. The slots 6 define the guiding means of the displaceable support 2.

Figures 3 and 4 show the displaceable support in a second working position at a different height that the fixed support 1 and show the retaining element 15 of the elongated blocking lever 10 in the unblocked position in order to facilitate the displacement of the aforementioned lever 10.

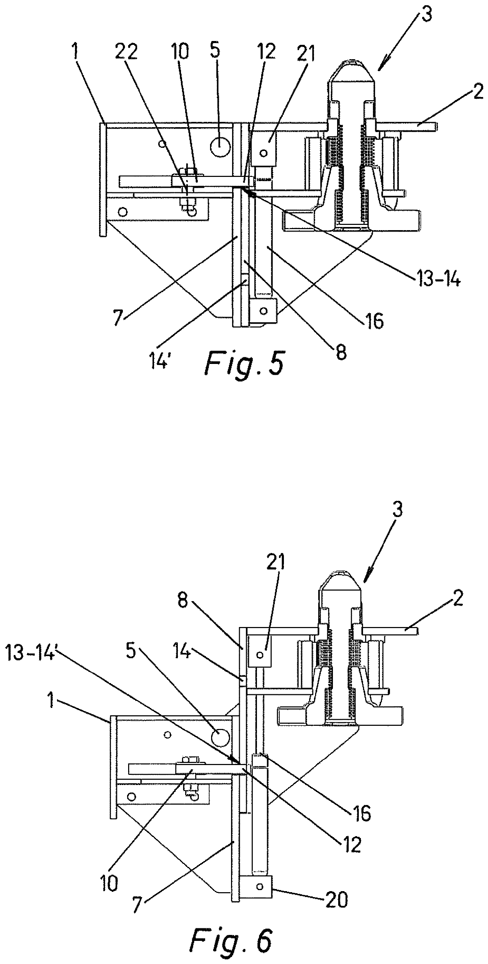

Figures 5, 6 and 7 show how the elongated blocking lever 10 acts in the two working positions of the displaceable support 2, as well as the pressuring element 16 in both positions.

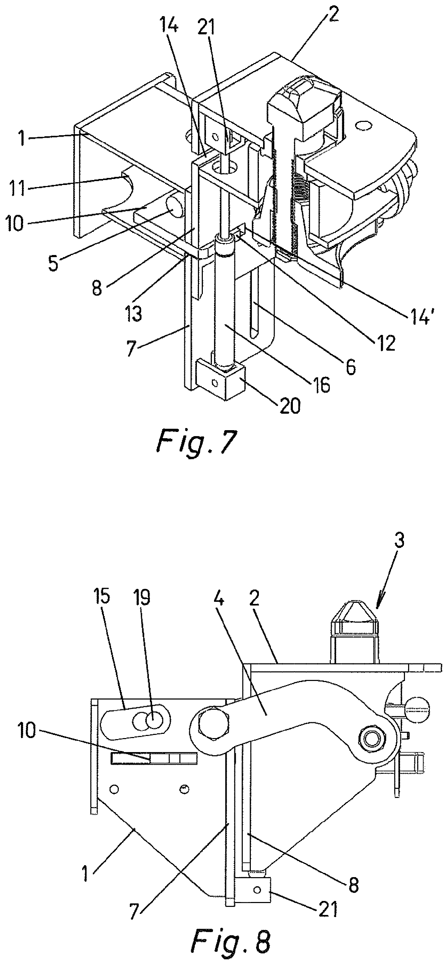

On the other hand, in figure 8, with the elongated blocking lever 10 released from the retaining element 15, an intermediate position of the displaceable element 2 has been represented in its transition from one working position to another, observing how the vertical adjoining walls 7 and 8 have moved slightly away from one another, thus preventing any friction between them.

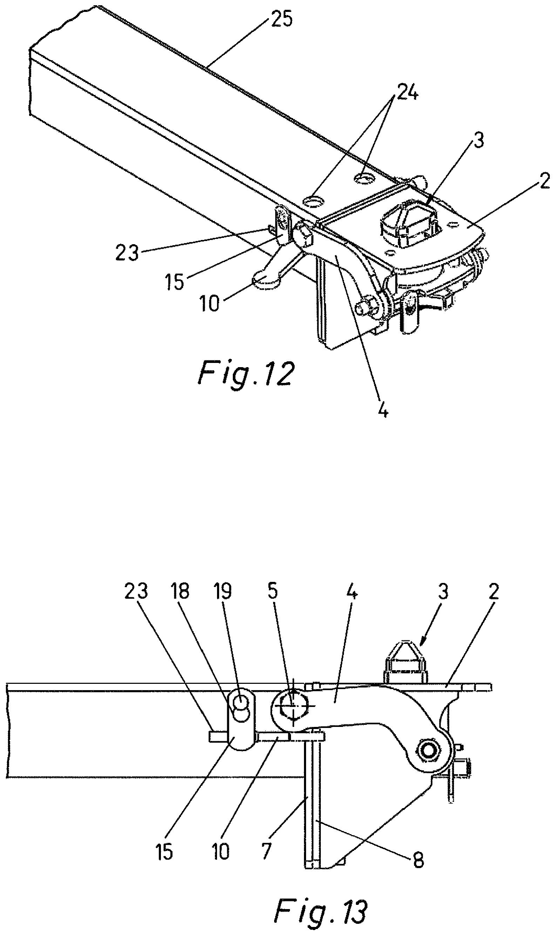

In figures 12 and 13 an embodiment of the invention is shown, in said embodiment the beam 25 of the chassis of the loading vehicle incorporates the necessary elements described to act as a fixed support itself, so that the beam 25 of the chassis of the loading vehicle has the corresponding supporting platform 11 for the elongated blocking lever, the axis 5 of the rotational junction of the pair of arms 4, the retaining element 15 of the elongated blocking lever 10 and the beam 25 of the chassis of the loading vehicle has the pair of access orifices 24 to the rotation axis of the elongated blocking lever 10 in its upper face.

Thus, during the manufacturing process of the transport vehicle itself, the beams 25 of the loading chassis are arranged for the coupling of the displaceable support 2, which is rotationally joined by the pair of arms 4.

## Claims

1. Adjustable system to attach containers to transport vehicles, being of the type of systems constituted by:
- a fixed support (1), fixable to the beams of the chassis of a vehicle; and
- a displaceable support (2), displaceable with respect to the fixed support (1), holding the fixing element named Twist Lock (3), being said fixing element (3) fixable to a corresponding corner of the container, where the displaceable support (2) adopts two working positions at different heights,
**characterized in that** the system comprises:
- a pair of arms (4) joined rotationally by an end to an axis (5) crossing the fixed support (1), and by the other end to the displaceable support (2) adjoined to the fixed support (1);
- guiding means of the displaceable support (2), said guiding means of the displaceable support (2) being defined by at least one vertical slot, according to its assembly position, made in a vertical adjoining wall of one of the supports, through which passes a guiding element connected to the other support; and
- blocking means of the displaceable support (2) in the different working positions, said blocking means being defined by an elongated lever (10), joined by a rotation axis (22) by one end to a horizontal supporting platform (11) internal to the fixed support (1) and protruding through the lateral face opposite to the face of the rotational junction to the same, and being provided with a protrusion (12) on one of its lateral sides in its section internal to the fixed support (1)
with the fixed support (1) and the displaceable support (2) being adjoined by a vertical wall in the two working positions, and during a transition from a working position to another working position, the displaceable support (2) describes an arch and the displaceable support (2) moves away from the fixed support (1).

2. Adjustable system to attach containers to transport vehicles according to claim 2, **characterized in that** the guiding means of the displaceable support (2) in respect of the fixed support (1) is defined by a pair of parallel vertical slots (6), made on a first adjoining vertical wall (7) of the fixed support (1) to a second vertical adjoining wall (8) of the displaceable support (2), according to its assembly position, through whose pair of vertical slots (6) pass the respective guiding elements (9) connected to the second vertical adjoining wall (8) of the displaceable support (2)

3. Adjustable system to attach containers to transport vehicles according to claim 2, **characterized in that** the first vertical wall (7) of the fixed support (1) adjoined to the second vertical wall (8) of the displaceable support (2) presents an orifice (13) matching the respective orifices (14-14') of the second vertical wall (8) of the displaceable support (2) in its two working positions.

4. Adjustable system to attach containers to transport vehicles according to claims 1 and 3, **characterized in that** in each one of the working positions of the displaceable support (2), one of the orifices of the pair of orifices (14-14') of the second vertical wall (8) matches the orifice (13) of the first vertical adjoining wall (7) of the fixed support (1).

5. Adjustable system to attach containers to transport vehicles according to claims 1, 3 and 4, **characterized in that** in the different working positions, the displaceable support (2) is blocked when the protrusion (12) of one of the lateral sides of the elongated blocking lever (10) passes through the matching orifices of the vertical walls (7-8) adjoined to both supports.

6. Adjustable system to attach containers to transport vehicles according to claim 1, **characterized in that** the elongated blocking lever (10) in its different positions is retained by a retaining element (15).

7. Adjustable system to attach containers to transport vehicles according to claims 1 and 6, **characterized in that** the retaining element (15) of the elongated blocking lever (10) is defined by a small positionable flange.

8. Adjustable system to attach containers to transport vehicles according to claim 1, **characterized in that** the displaceable support (2) is actuate stressed by a pressuring element (16), which is affixed to the fixed support (1) by one of its extremities and to the displaceable support (2) by its other extremity.

## Patentansprüche

1. Verstellbares System zum Anbringen von Containern an Transportfahrzeugen, das von dem Typ von Systemen ist, die gebildet werden durch:
einen stationären Halter (1), der an den Trägern des Fahrgestells eines Fahrzeugs befestigt werden kann; sowie
einen verschiebbaren Halter (2), der in Bezug auf den stationären Halter (1) verschoben werden kann und das als Twist-Lock bezeichnete Befestigungselement (3) hält, wobei das Befestigungselement (3) an einer entsprechenden Ecke des Containers befestigt werden kann,
und der verschiebbare Halter (2) zwei Arbeitspositionen an unterschiedlichen Höhen einnimmt
**dadurch gekennzeichnet, dass** das System umfasst:
ein Paar Arme (4), die über ein Ende drehbar mit einer Achse (5), die den stationären Halter (1) kreuzt, und über das andere Ende mit dem verschiebbaren Halter (2) verbunden sind, der an den stationären Halter (1) angrenzt;
Führungseinrichtungen des verschiebbaren Halters (2), wobei die Führungseinrichtungen des verschiebbaren Halters (2) durch wenigstens einen vertikalen Schlitz, der entsprechend seiner Montageposition in einer vertikalen angrenzenden Wand eines der Halter ausgebildet ist und durch den ein Führungs-Element hindurchtritt, das mit dem anderen Halter verbunden ist; sowie
eine Sperreinrichtung des verschiebbaren Halters (2) an der anderen Arbeitsposition, wobei die Sperreinrichtung durch einen länglichen Hebel (10) gebildet wird, der mittels einer Drehachse (22) über ein Ende mit einer horizontalen Trageplattform (11) im Inneren des stationären Halters (1) verbunden ist und über die seitliche Fläche vorsteht, die der Fläche der Dreh-Verbindung mit dieser gegenüberliegt, und mit einem Vorsprung (12) an einer seiner Längsseiten in seinem Teilabschnitt im Inneren des stationären Halters (1) versehen ist,
wobei der stationäre Halter (1) und der verschiebbare Halter (2) in den zwei Arbeitspositionen über eine vertikale Wand aneinandergrenzen und während eines Übergangs von einer Arbeitsposition an eine andere Arbeitsposition der verschiebbare Halter (2) einen Bogen beschreibt und sich der verschiebbare Halter (2) von dem stationären Halter (1) weg bewegt.

2. Verstellbares System zum Anbringen von Containern an Transportfahrzeugen nach Anspruch 2, **dadurch gekennzeichnet, dass** die Führungseinrichtungen des verschiebbaren Halters (2) in Bezug auf den stationären Halter (1) durch ein Paar paralleler vertikaler Schlitze (6) gebildet werden, die an einer ersten angrenzenden vertikalen Wand (7) des stationären Halters an einer zweiten vertikalen angrenzenden Wand (8) des verschiebbaren Halters (2) entsprechend seiner Montageposition ausgebildet sind, wobei durch die paarigen vertikalen Schlitze (2) die jeweiligen Führungs-Elemente (9) hindurchtreten, die mit der zweiten vertikalen angrenzenden Wand (8) des verschiebbaren Halters (2) verbunden sind.

3. Verstellbares System zum Anbringen von Containern an Transportfahrzeugen nach Anspruch 2, **dadurch gekennzeichnet, dass** die erste vertikale Wand (7) des stationären Halters (1), die an die zweite vertikale Wand (8) des verschiebbaren Halters (2) angrenzt, eine Öffnung (13) aufweist, die den jeweiligen Öffnungen (14-14') der zweiten vertikalen Wand (8) des verschiebbaren Halters (2) in seinen zwei Arbeitspositionen entspricht.

4. Verstellbares System zum Anbringen von Containern an Transportfahrzeugen nach den Ansprüchen 1 und 3, **dadurch gekennzeichnet, dass** in jeder der Arbeitspositionen des verschiebbaren Halters (2) eine der Öffnungen des Paars von Öffnungen (14-14') der zweiten vertikalen Wand (8) der Öffnung (13) der ersten vertikalen angrenzenden Wand (7) des stationären Halters (1) entspricht.

5. Verstellbares System zum Anbringen von Containern an Transportfahrzeugen nach den Ansprüchen 1, 3 und 4, **dadurch gekennzeichnet, dass** in den verschiedenen Arbeitspositionen der verschiebbare Halter (2) gesperrt ist, wenn der Vorsprung (12) einer der Längsseiten des länglichen Sperrhebels (10) durch die einander entsprechenden Öffnungen der an beide Halter angrenzenden vertikalen Wände (7-8) hindurchtritt.

6. Verstellbares System zum Anbringen von Containern an Transportfahrzeugen nach Anspruch 1, **dadurch gekennzeichnet, dass** der längliche Sperrhebel (10) in seinen verschiedenen Positionen durch ein Halteelement (15) gehalten wird.

7. Verstellbares System zum Anbringen von Containern an Transportfahrzeugen nach den Ansprüchen 1 und 6, **dadurch gekennzeichnet, dass** das Halteelement (15) des länglichen Sperrhebels (10) durch einen kleinen positionierbaren Flansch gebildet wird.

8. Verstellbares System zum Anbringen von Containern an Transportfahrzeugen nach Anspruch 1, **dadurch gekennzeichnet, dass** der verstellbare Halter (2) zum Betätigen durch ein Drückelement (16) gespannt wird, das über eines seiner äußersten Enden an dem stationären (1) und über sein anderes äußerstes Ende an dem verschiebbaren Halter (2) befestigt ist.

## Revendications

1. Système ajustable pour fixer des contenants à des véhicules de transport, qui sont du type de systèmes constitués par :
- un support fixe (1) pouvant être fixé aux poutres du châssis d'un véhicule ; et
- un support déplaçable (2), déplaçable par rapport au support fixe (1), maintenant l'élément de fixation dénommé verrou tournant (3), ledit élément de fixation (3) pouvant être fixé sur un coin correspondant du contenant, où le support déplaçable (2) adopte deux positions de travail à différentes hauteurs,
**caractérisé en ce que** le système comprend :
- une paire de bras (4) assemblés en rotation par une extrémité à un axe (5) traversant le support fixe (1), et par l'autre extrémité au support déplaçable (2) attenant au support fixe (1) ;
- un moyen de guidage du support déplaçable (2), ledit moyen de guidage du support déplaçable (2) étant défini par au moins une fente verticale, selon sa position d'assemblage, réalisée dans une paroi attenante verticale de l'un des supports, à travers lequel passe un élément de guidage raccordé à l'autre support ; et
- un moyen de blocage du support déplaçable (2) dans les différentes positions de travail, ledit moyen de blocage étant défini par un levier allongé (10), assemblé par un axe de rotation (22) par une extrémité à une plateforme de support horizontale (11) à l'intérieur du support fixe (1) et faisant saillie à travers la face latérale opposée à la face de la jonction rotative par rapport à ce dernier et étant prévu avec une saillie (12) sur l'un de ses côtés latéraux dans sa section à l'intérieur du support fixe (1),
avec le support fixe (1) et le support déplaçable (2) qui sont attenants grâce à une paroi verticale dans les deux positions de travail, et pendant une transition d'une position de travail à une autre position de travail, le support déplaçable (2) décrit un arc et le support déplaçable (2) s'éloigne du support fixe (1).

2. Système ajustable pour fixer des contenants à des véhicules de transport selon la revendication 2, **caractérisé en ce que** le moyen de guidage du support déplaçable (2) par rapport au support fixe (1) est défini par une paire de fentes verticales parallèles (6) réalisées sur une première paroi verticale (7) attenante du support fixe (1), à une seconde paroi attenante verticale (8) du support déplaçable (2), selon sa position d'assemblage, à travers laquelle paire de fentes verticales (6), passent les éléments de guidage (9) respectifs raccordés à la seconde paroi attenante verticale (8) du support déplaçable (2).

3. Système ajustable pour fixer des contenants à des véhicules de transport selon la revendication 2, **caractérisé en ce que** la première paroi verticale (7) du support fixe (1) attenant à la seconde paroi verticale (8) du support déplaçable (2) présente un orifice (13) correspondant aux orifices (14-14') respectifs de la seconde paroi verticale (8) du support déplaçable (2) dans deux positions de travail.

4. Système ajustable pour fixer des contenants à des véhicules de transport selon les revendications 1 et 3, **caractérisé en ce que** dans chacune des positions de travail du support déplaçable (2), l'un des orifices de la paire d'orifices (14-14') de la seconde paroi verticale (8) correspond à l'orifice (13) de la première paroi attenante verticale (7) du support fixe (1).

5. Système ajustable pour fixer des contenants à des véhicules de transport selon les revendications 1, 3 et 4, **caractérisé en ce que** dans les différentes positions de travail, le support déplaçable (2) est bloqué lorsque la saillie (12) de l'un des côtés latéraux du levier de blocage allongé (10) passe par les orifices correspondants des parois verticales (7-8) attenante aux deux supports.

6. Système ajustable pour fixer des contenants à des véhicules de transport selon la revendication 1, **caractérisé en ce que** le levier de blocage allongé (10) dans ses différentes positions, est retenu par un élément de retenue (15).

7. Système ajustable pour fixer des contenants à des véhicules de transport selon les revendications 1 et 6, **caractérisé en ce que** l'élément de retenue (15) du levier de blocage allongé (10) est défini par une petite bride pouvant être positionnée.

8. Système ajustable pour fixer des contenants à des véhicules de transport selon la revendication 1, **caractérisé en ce que** le support déplaçable (2) est contraint par un élément de pression (16), qui est fixé sur le support fixe (1) par l'une de ses extrémités et sur le support déplaçable (2) par son autre extrémité.
